# EUROPEAN PATENT SPECIFICATION

(11) **EP 1 723 000 B1**
(45) Date of publication and mention of the grant of the patent: **16.01.2008**
(21) Application number: 05708303.2
(22) Date of filing: 10.02.2005
(51) Int. Cl.: B60N 2/30

(54) **MOUNTING ARRANGEMENT FOR A VEHICLE SEAT**
BEFESTIGUNGSANORDNUNG FÜR EINEN FAHRZEUGSITZ
SYSTEME DE MONTAGE POUR SIEGE DE VEHICULE

(30) Priority: 13.02.2004 GB 0403268; 19.02.2004 GB 0403754; 30.03.2004 GB 0407200
(43) Date of publication of application: 22.11.2006
(73) Proprietor: Nissan Motor Manufacturing (UK) Ltd., Bedfordshire MK43 0DB (GB)
(72) Inventor: HEYWARD, Ross, Nissan Technical Centre Europe Ltd, Bedfordshire MK43 0DB (GB)
(74) Representative: Holmes, Matthew William
(86) International application number: PCT/GB2005/000478
(87) International publication number: WO 2005/080129

(56) References cited:
- DE-A1- 10 220 706
- US-A- 3 572 818
- US-A- 5 118 062
- US-A- 6 106 066
- US-A1- 2003 127 891

## Description

The invention relates to a mounting arrangement for a vehicle seat. In particular, the invention relates to mounting arrangement, which enables convenient adaptation and manoeuvrability of the vehicle seat for different vehicle uses.

In many vehicles, the front seat assembly includes a driver's seat on one side of the vehicle, which is arranged next to a passenger's seat on the other side of the vehicle. The rear seat assembly often includes a rear seat extending across the width of the vehicle (a so-called bench-type seat) which is suitable for carrying two or more passengers as shown in document US-A-6106066 which is considered as the closest prior art. Alternatively, and particularly in Multi Passenger Vehicles (MPVs), the rear seat assembly may include two or more separate seats.

Each front and rear seat is usually mounted upon a respective seat support structure which is fixed to the vehicle floorpan. Known seat support structures are relatively bulky and heavy and thus take up a large volume of the vehicle interior. It is common for the seat supports for the front seats to be mounted in runners or guide tracks fixed to the floorpan, thereby to permit a degree of forwards and rearwards movement of the seats along the vehicle axis. The rear seat assembly may also be mounted in a similar fashion, although more commonly the rear seat assembly is static.

It is desirable in many instances for a vehicle to be adaptable in terms of the number of passengers and the size and volume of luggage that can be carried. The adaptability of known vehicles of the aforementioned type is limited, and it is an object of the invention to address this.

According to a first aspect of the invention, there is provided a cantilever mounting arrangement suitable for use in mounting a vehicle seat upon a vehicle seat support, the cantilever mounting arrangement comprising a lower cantilever member which is pivotally mounted to a support member and an upper cantilever member which is pivotally mounted to the support member so as to enable the seat assembly to be elevated out of a seating position into an elevated position through pivotal movement of said cantilever members, wherein the upper and lower cantilever members project under a side of a base of the vehicle seat, in use, so as to provide a sole means for supporting for the vehicle seat base above the vehicle floorpan.

It is a particular advantage of the invention that a versatile vehicle seat assembly is provided, which is adaptable between several different configurations depending on the vehicle user's requirements. By virtue of the cantilever mounting means, the vehicle seat may be supported only by a seat support which runs substantially centrally along the vehicle floorpan, but is otherwise unsupported. If the seat is of the type which is foldable into a compact seat module, when the cantilever mounting means is pivoted upwards the seat module is elevated within the vehicle interior so as to clear extra space within the vehicle interior to accommodate luggage. Due to the cantilever mounting means being mounted upon a central seat support, the surface of the vehicle floorpan beneath the lowered seat need not be provided with runners or any other means of support, and so a suitable loading volume is provided.

In a preferred embodiment, the support member is a movable carriage member which is slidably mounted upon the vehicle seat support, in use.

In a further preferred embodiment, a first end of the lower cantilever arm is pivotally mounted to the support member about a lower pivot axis and a first end of the upper cantilever arm is pivotally mounted to the support member about an upper pivot axis, and wherein a second end of the lower cantilever arm is slidingly coupled to the upper cantilever arm.

Preferably, the upper cantilever arm is provided with a channel along an outer edge thereof, and wherein the lower cantilever arm is provided with a member for sliding engagement within the channel to allow sliding movement of the lower cantilever arm relative to the upper cantilever arm when the arms are raised and/or lowered.

In one embodiment, the support member may be bowed between a relatively inner upper end relative to the seat support and a relatively outer lower end, the support member being of U-shaped cross-section so as to define a U-shaped channel, the lower pivot axis spanning the U-shaped channel at a lower end thereof and the upper pivot axis spanning the U-shaped channel at an upper end thereof.

The upper cantilever arm may be arranged to be received within a retaining channel provided in the seat base, in use.

In a particularly preferred embodiment, the cantilever mounting means further includes means for detachably mounting the vehicle seat base to the upper cantilever arm. For example, the detachable mounting means may include a spring-biased catch member which catches in the seat base when the seat is mounted upon the cantilever mounting arrangement, said detachable mounting means further comprising means for acting against the spring force to disengage the catch from the seat base when the seat is to be dismounted.

For the purpose of this specification, references to 'front' and 'rear', and 'forward' and 'rearward', shall be taken to refer to what is considered usually to be the front (forward) end of a vehicle and the rear (rearward) end of the vehicle. Reference to the 'seating position' of the seat assembly shall be taken to mean that seat configuration which provides a vehicle passenger with a seat, and reference to the 'elevated position' shall be taken to mean one in which the seat, folded or otherwise, is at least partially elevated within the vehicle interior so as to clear a volume for luggage.

The invention will now be described, by way of example only, with reference to the accompanying drawings in which:
Figure 1 is a perspective view of an I-beam seat support of a seat assembly for a vehicle,
Figure 2 is a similar view of the I-beam seat support shown in Figure 1, but from a different perspective,
Figure 3 is a cross sectional end view of the I-beam seat support in Figures 1 and 2,
Figure 4 is a perspective view of the I-beam seat support in Figure 3, when provided with a cantilever mounting means of the present invention for supporting a vehicle seat,
Figure 5 is an end view of a U-shaped carriage member for mounting upon the I-beam seat support in Figures 1 to 4,
Figure 6 is a perspective view, from the front, of a vehicle seat in accordance with the present invention, for mounting upon the I-beam seat support in Figures 1 to 4,
Figure 7 is a side view of the vehicle seat in Figure 6,
Figure 8 is a schematic view, from the side, of the vehicle seat in Figures 6 and 7 when in a folded configuration and a lowered position, to illustrate mounting of the folded seat upon the cantilever mounting means,
Figure 9 is a side view of the folded seat shown in Figure 8 when in the lowered position and with a head rest thereof folded away,
Figure 10 is a similar view of the folded seat shown in Figure 9, to illustrate the head rest unfolded to provide a handle means,
Figure 11 is a view from the rear of the folded seat shown in Figures 8 to 10 when in the lowered position,
Figure 12 is a perspective view of the folded seat in Figures 8 to 11 when the seat is in an elevated position,
Figure 13 is a view of the folded seat shown in Figures 8 to 12, viewed from the rear, when in a part-elevated position,
Figure 14 is a view of the folded seat shown in Figures 8 to 13, viewed from the rear, when in a fully elevated position,
Figure 15 is a similar view of the folded seat to that shown in Figure 14, and
Figure 16 is a schematic view of a seat of an type of seat in which a detachable mounting arrangement is provided to allow the seat to be removed from the I-beam seat support altogether.

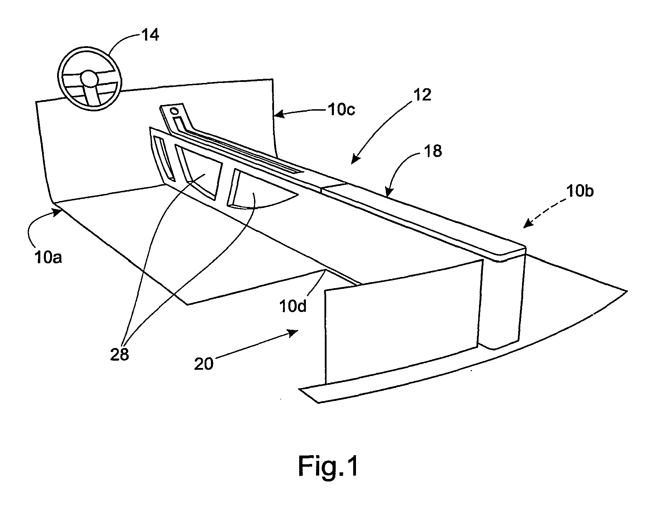

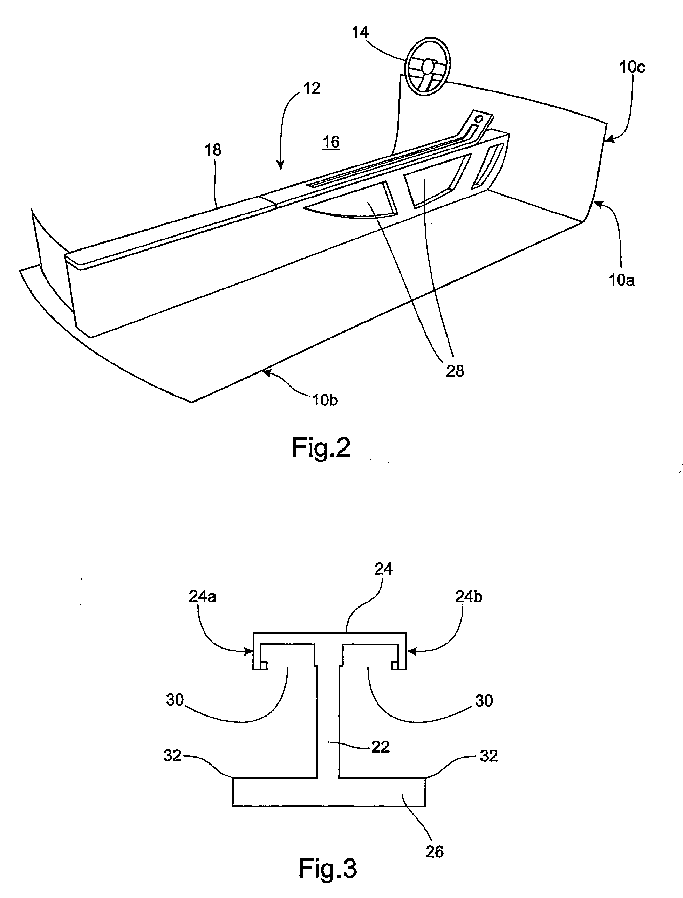

Referring to Figures 1 and 2, there is shown a portion of a floorpan 10 of a vehicle upon which a seat support structure, referred to generally as 12, is mounted. The phrase "vehicle floorpan" is a well known term of art for the manufactured part of the vehicle which defines the floor of the vehicle interior. The floorpan 10 extends between a front end 10a thereof, located towards the front of the vehicle, and a rear end 10b thereof, located towards the rear of the vehicle. The floorpan 10 may be manufactured to include side portions (not shown) which form the vehicle wheel arches and a raised front portion 10c through which the stem of a vehicle steering wheel 14 projects. When the vehicle is fully assembled, the vehicle floorpan 10 defines the floor of the vehicle cabin interior 16, being that volume within which passengers and/or luggage may be carried. In the particular example of Figures 1 and 2, the floorpan 10 is shaped at its rear end 10b to define a ceiling 10d of a luggage storage volume 20.

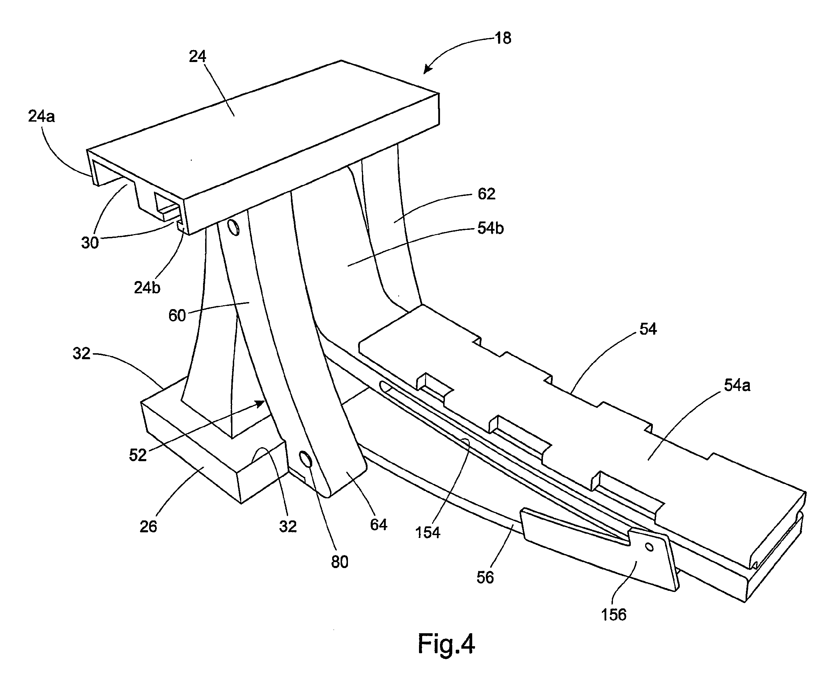

Referring also to Figures 3 and 4, the seat support 12 includes a support beam 18 which extends along the major axis of the vehicle, mounted upon or being integrally formed with the floorpan 10 and being substantially centrally located between left and right sides of the vehicle. As shown in Figure 3, the central beam 18 has a cross section generally in the form of the letter 'I'. Structures of this type are often referred to as 'I-beam' structures. A rear section of the I-beam support 18 (i.e. towards the rear end 10b of the floorpan 10) includes a generally vertical upright section 22, an upper horizontal roof section 24 and a lower horizontal base section 26. At the front section of the I-beam support 18, the upright section 22 is slit to define two leg sections, 22a, 22b. The upright leg sections 22a, 22b of the I-beam support 18 include first and second openings 28, as can be seen in Figures 1 and 2. By providing the openings 28 in the I-beam support 18 and by splitting the upright section 22 to defines the legs 22a, 22b at the front end of the support 18, the overall weight of the I-beam support 18 is reduced. A rear section of the I-beam support is solid, however, and defines a wall of the luggage space 20 at the rear of the vehicle. Modifications of the shape and style of the upright section 22 of the I-beam support are envisaged for different vehicles. The I-beam support 18 may be formed form carbon fibre, titanium or steel, for example, and is a sufficiently strong structure to support one or more vehicle seats, and seated passengers, which are not supported upon any other part of the floorpan 10, as described further below.

The roof section 24 of the I-beam support 18 includes first and second flanges 24a, 24b which extend along the length of the roof section 24, one on each side of the upright section 22. Each flange 24a, 24b defines, together with the outer surface of the upright section 22, a channel 30. The channels 30 extend along the length of the I-beam support 18, one either side of the upright section 22, and receive a portion of a movable carriage 52 (see Figure 4) which supports a vehicle seat. The upper outermost edges 32 of the base section 26 are of generally square section. The base section 26 of the I-beam support 18 rests upon the vehicle floorpan 10 or, alternatively, may be integrally formed therewith.

The I-beam support 18 provides a support for a vehicle seat to which the present invention relates. Typically, two or more vehicle seats will be mounted upon the I-beam support 18. For example, two front seats may be supported one on either side of the I-beam support 18 (i.e. one of the left vehicle side and one on the right vehicle side) towards the front end 10a of the floorpan 10. Also, two rear seats may be supported one on either side of the I-beam support towards the rear end -10b of the floorpan 10. Further rows of vehicle seats may be provided in larger vehicles.

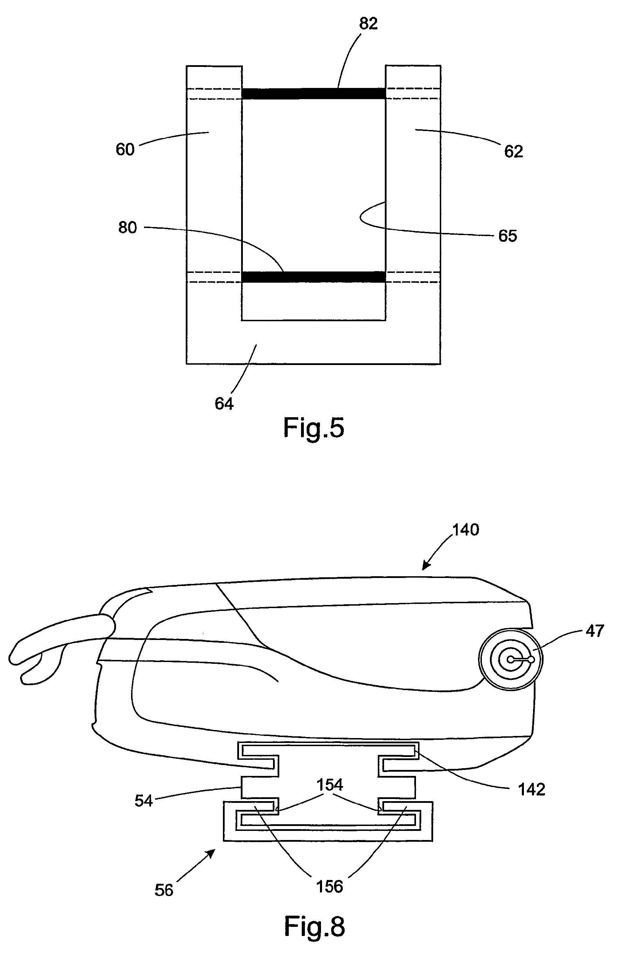

The I-beam support carriage member 52 is mounted upon the beam so as to allow sliding movement of the carriage member 52 along the main I-beam axis. The carriage member 52 is formed from a pair of front and rear struts, 60 and 62 respectively, connected at base ends thereof by a carriage foot portion 64. As can be seen more clearly in Figure 5, the carriage member 52 is of generally U-type shape, with the struts 60, 62 and the foot 64 defining an internal U-shaped channel 65. Each strut 60, 62 of the pair is of slightly bowed or curved form, so as to bow outwards from the I-beam support 18 from a relatively inner upper strut end (i.e. an end closer to the I-beam support 18) to a relatively outer strut end.

In order to mount the carriage member 52 on the I-beam support 18, an upper end of each strut 60, 62 is located within one of the upper channels 30 of the I-beam support 18 (as seen in Figures 3 and 4). The carriage foot 64 has a squared recess or groove 70 on its inwardly-facing side (i.e. that side facing the I-beam support 18), which is shaped to co-operate with the outer squared edges 32 of the I-beam base section 26. The carriage member 52 is able to slide along the main I-beam axis, with the upper ends of the struts 60, 62 riding in the associated channel 30 and the squared recess of the foot 64 in sliding contact with the base section 26 of the I-beam support 18. If a second, similar seat is to be mounted on the other side of the I-beam support 18, a second carriage member is mounted on the other side of the beam, in reverse orientation, in a similar fashion.

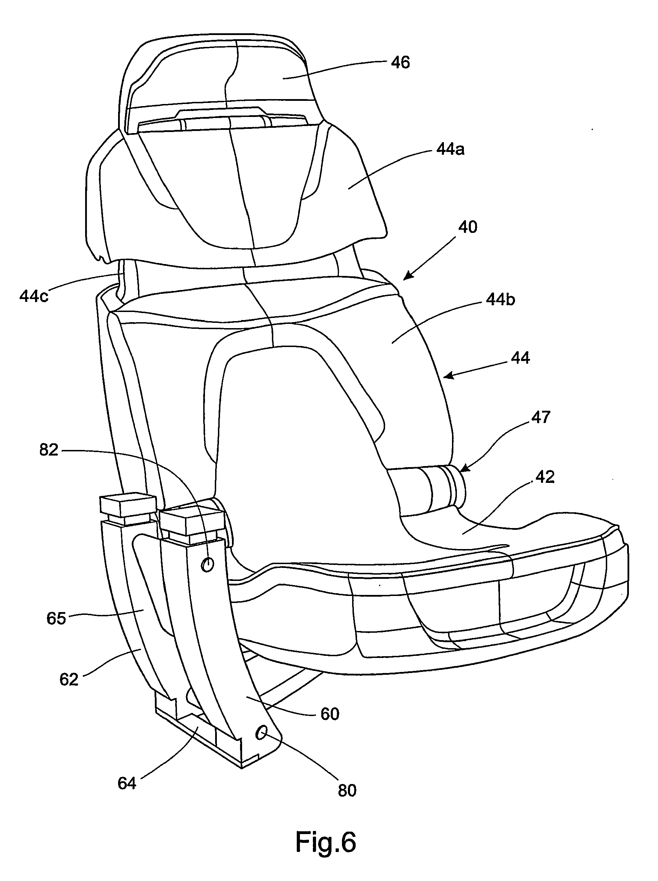

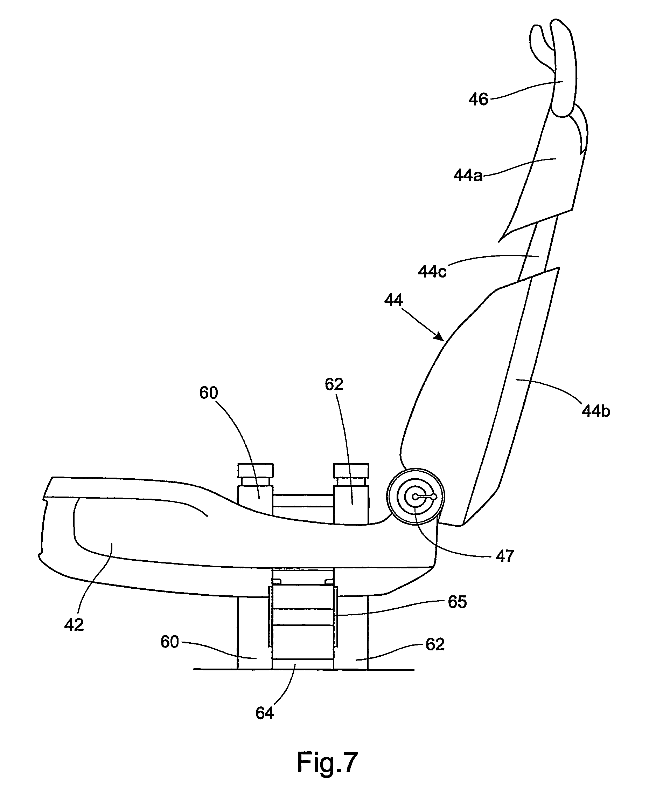

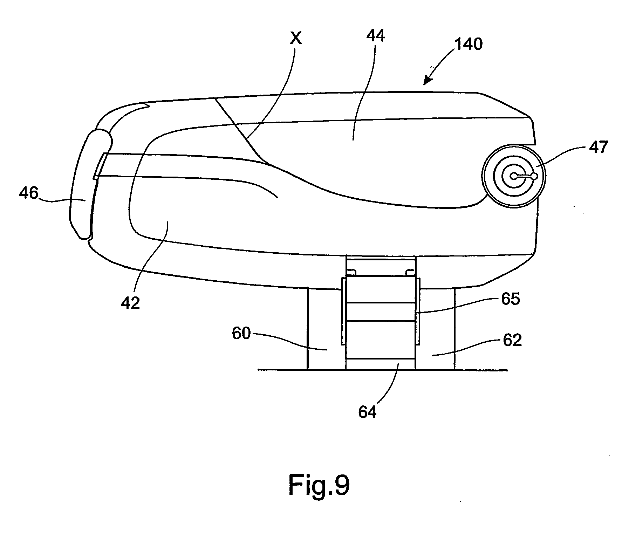

Figures 6 and 7 show a vehicle seat 40 which is suitable for mounting upon the I-beam support 18 in Figures 1 to 4. Although in practice several seats may be supported on the I-beam support 18, for simplicity only one of the seats will be described in detail here. The seat 40 includes a seating portion, or seat base 42, upon which a passenger sits, a seat back portion 44 upon which a seated passenger rests his or her back, and a rest 46 for a seated passenger's head. The seating portion 42 and the seat back 44 may have several sections, depending on stylistic requirements, and are mounted relative to one another in a foldable fashion so that the seat 40 has folded and unfolded configurations. When in the folded configuration, the seat forms a compact seat module (hereinafter identified by numeral 140) having a generally suitcase-style or briefcase-style appearance, as shown in Figures 9 to 11.

The folding mechanism to allow folding of the seating portion 42 and the seat back 44 relative to one another may include an adjustment mechanism, referred to generally as 47, which is provided in the region of intersection between the base of the seat back 44 and the rear of the seating portion 42. The adjustment mechanism 47 is arranged to allow the seat back 44 to be folded so far forwards that it can be brought into contact with, and lie against, the seating portion 42. The adjustment mechanism 47 takes the form of a pivotal mounting arrangement including a generally cylindrical pivot bar 45 which extends along the rear side of the seating portion 42 and upon which the lower end of the seat back 44 is pivotally mounted. For this purpose, a portion of the lower end of the seat back 44 is cut-away to define a recess 51 having a part-circular profile which substantially matches that of the cylindrical outer surface of the bar 45. A corresponding recess 53 is also formed in a cut away section on the rear side of the seating portion 52, to receive the pivot bar 45.

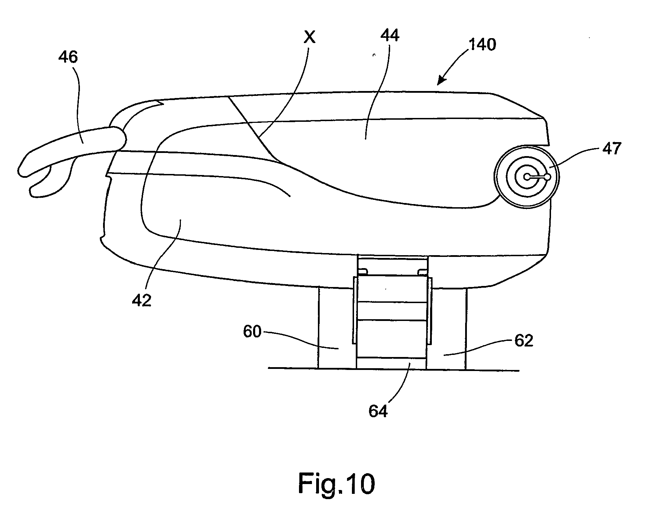

As the seat back 44 is pivoted forwards about the axis of the bar 45, the recessed surface 51 of the seat back 44 rides over the outer bar surface allowing movement of the seat back 44 until it is brought into contact with the seating portion 42. The engageable surfaces of the seat back 44 and the seating portion 42 are co-operably shaped so that two parts 42, 44 fit together snugly, when folded. This is best illustrated in the side views of Figures 9 and 10.

It will be apparent from the accompanying drawings and description, that the seat back 44 is pivoted forwards through the full range of movement between its upright position, in which a seating position is provided for a passenger, and its folded flat position, so as to form a compact seat module. The adjustment mechanism 47 therefore differs from known vehicle seat-folding mechanisms in which the seat back 44 of the seat 40 is only able to pivot forwards through a relatively small range, for example to allow easier access for passengers climbing into and/or out of the rear of the vehicle.

Another hinged or folding-type mechanism may be provided instead of the pivotal adjustment mechanism, so as to allow the seat back 44 to be folded relative to the seating portion 42 in the aforementioned manner, so as to allow the seat back 44 to pivot forwards so far that it makes contact with the seating portion 42. In another embodiment, the seat back 44 and the seating portion 42 may be integrally formed, with the seat material being suitably pliable or flexible to allow bending of the seat back 44 towards the seating portion 422 until respective surfaces of the two parts make contact.

As can be seen in Figures 6 and 7, it may be preferable for the seat back 44 to take the form of an adjustable seat back formed in several sections; an upper seat back section 44a, a lower seat back section 44b and an intermediate seat back section 44c. When the seated position is to be adopted, it is beneficial for the intermediate seat back section 44b to be present for the seated passenger for reasons of comfort. When the seat is to be folded, it is advantageous to move the upper seat back section 44a relative to the lower seat back section 44b, thereby engaging these parts (at engagement line X, as shown in Figures 9 and 10). For example, the upper seat back section 44a may be partially hollow and shaped to receive the intermediate seat back section 44c when lowered. A seat back height adjuster (not shown) is provided between the upper and intermediate sections 44a, 44c of the seat back 44 to allow the upper section 44a to be lowered over the intermediate section 44c. With the upper seat back section 44a moved towards the lower seat back section 44b in this way, the intermediate section 44c thus becomes encased within the upper section 44a so that the overall length of the seat back 44 is contracted. The shape of the seat back 44 is then suitably matched to that of the seating portion 42 when the seating and seat back parts 42, 44 are folded into contact with one another to form the module 140.

When the seat adopts the folded module configuration, the head rest 46 provides a convenient handle means for manoeuvring the seat back and forth along the I-beam support 18 or for carrying the folded seat when detached from the I-beam support 18, as described further below. When the seat 40 is required to accommodate a passenger, the seating portion 42 and the seat back 44 are unfolded to adopt the unfolded configuration of the seat shown in Figures 6 and 7. As can be seen by comparing Figures 9 and 10, preferably the head rest 46 of the seat is hingedly or pivotally mounted to the seat back 44 so as to allow the rest 46 to be folded out (Figure 10) to provide a rest surface for a passenger's head when the seat 40 is unfolded, or folded away (Figure 9) to reduce the overall volume of the folded seat module 140.

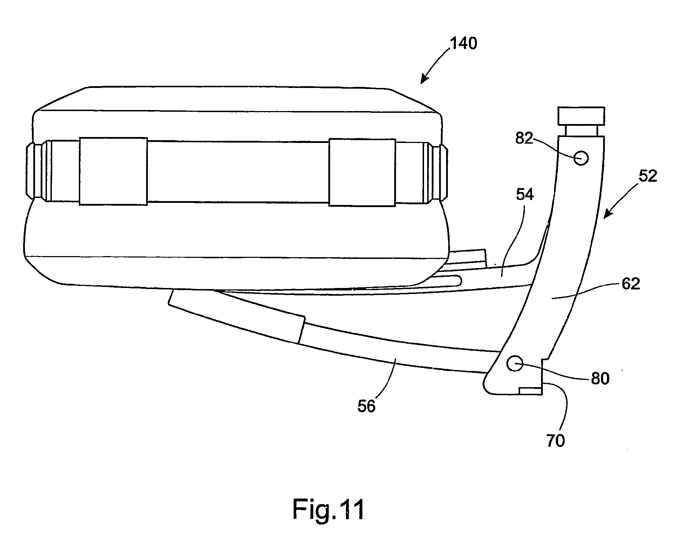

Referring to Figures 11 to 15, the seat 40 is mounted upon the I-beam carriage member 52 by a cantilever mounting means in accordance with the present invention. The cantilever mounting means, referred to generally as 50, is configured so as to support the seat 40, 140 (whether folded or unfolded) such that a substantially vacant space (58 - Figure 11) is defined between the underside of the seating portion 42 and the vehicle floorpan 10. Thus, as will be further apparent from the following description, the cantilever mounting means 50 enables the seat 40 to be mounted upon the seat support 18 in such a manner that it is supported only by means of the I-beam support 18, and by no other part of the vehicle floorpan 10 or any structure mounted thereupon.

The cantilever mounting means 50 includes a first, lower cantilever arm 56 which is mounted upon the carnage member 52 in the region of the carriage foot 64 by a first pivot mounting means. The first pivot mounting means includes a first, lower pivot pin 80 defining a first, lower pivot axis and extending through the lower sections of the carriage struts 60, 62 to cross the U-shaped channel 65 at a base end thereof (as shown in Figure 5). An upper cantilever arm 54 is mounted upon the carriage member 52 through a second pivot mounting means, which takes the form of a second, upper pivot pin 82. The upper pivot pin 82 defines a second, upper pivot axis and crosses the U-shaped channel 65 at an upper end thereof to pass through upper sections of the carnage struts 60, 62.

A first end of the lower cantilever arm 56 is pivotally mounted upon the lower pivot pin 80 so as to allow pivotal movement of the arm 56 about the lower pivot axis between lowered and raised positions. A first, upper end of the second cantilever arm 54 is pivotally mounted upon the upper pivot pin 82 so as to allow pivotal movement of the upper arm 54 about the upper pivot axis between lowered and raised positions. Due to the slight outward bowing of the carriage struts 60, 62 towards the carriage foot 64, it will be appreciated that the pivot axes, defined by pins 80 and 82, are arranged to be laterally spaced from one another, relative to the main I-beam axis, so that pivotal movement of the lower arm 56 about the lower pivot axis is eccentric to pivotal movement of the upper arm 54 about the upper pivot axis 82 as the arms 54, 56 are lowered and raised.

The end of the lower cantilever arm 56 remote from the pivot pin 80 is in sliding co-operation with the upper arm 54 so as to allow pivotal movement of both the lower and upper arms 56, 54 together. To allow said sliding co-operation, a first pair of flanges or projection members 156 is provided on the lower cantilever arm 56, each of said members being slideable within a respective channel 154 defined by a groove formed along the outer edge of the upper cantilever arm 54. The projections 156 are slideable within their respective channels 154 so as to allow the free end of the lower cantilever arm 56 to slide relative to the upper cantilever arm 54 as the arms 54, 56 are pivoted about their respective pivot pins 82, 80 between elevated and lower positions.

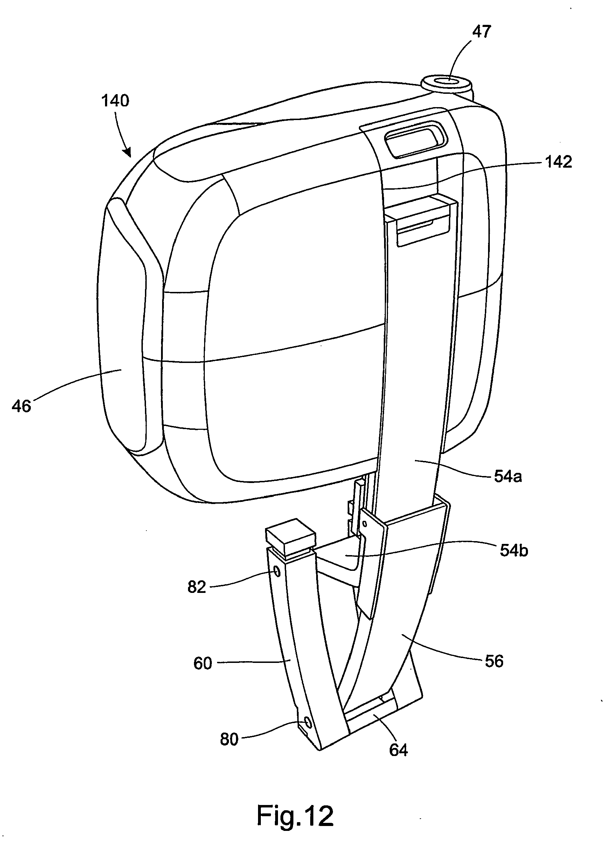

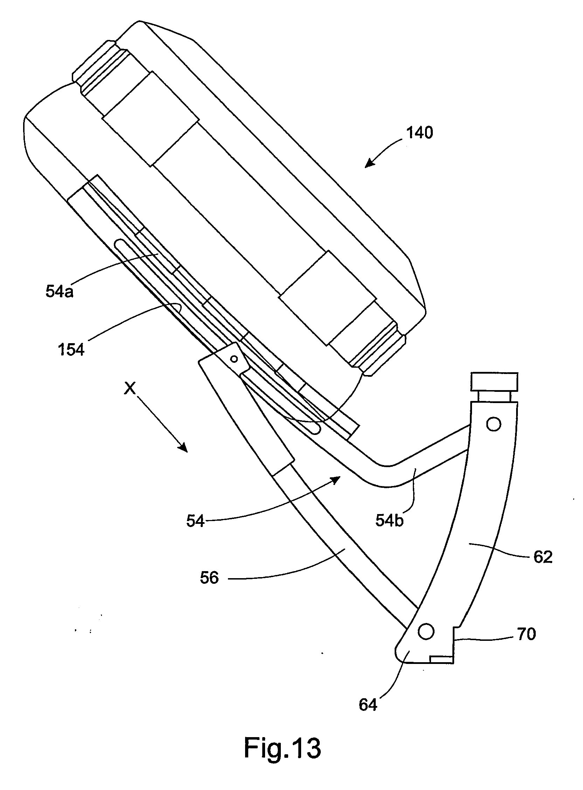

As can be seen most clearly in Figures 4, 11 and 12, the upper cantilever arm 54 is a generally L-shaped member having a first arm part 54a, forming the back of the L, and a second arm part 54b forming the foot of the L. Referring to Figure 12 in particular, the underside of the seating portion 42 of the seat 40 is provided with a retaining channel 142 within which the back part 54a of the upper cantilever arm 54 is received. A clear view of the sliding connection between the upper and lower cantilever arms 54, 56, and the mounting of the upper cantilever arm 54 to the seat 40, is also shown in Figure 13. A narrow clearance is defined between the retaining channel 142 and the back part 54a of the upper cantilever arm 54 so as to allow the projections 156 on the lower cantilever arm 56 to ride through the channels 154, with clearance through the retaining channel 142, when the seat module 140 is being raised and/or lowered.

It will be appreciated that the cantilever arms 54, 56 mount the seat upon the I-beam support 18, via the carriage member 52, by extending beneath the seat 40 from one of the seat sides. This differs from a conventional flip-up type of seat (for example as found in football stadiums and the like) where the hinge mechanism for lowering and raising the seat extends underneath the seat from the rear side of the seat.

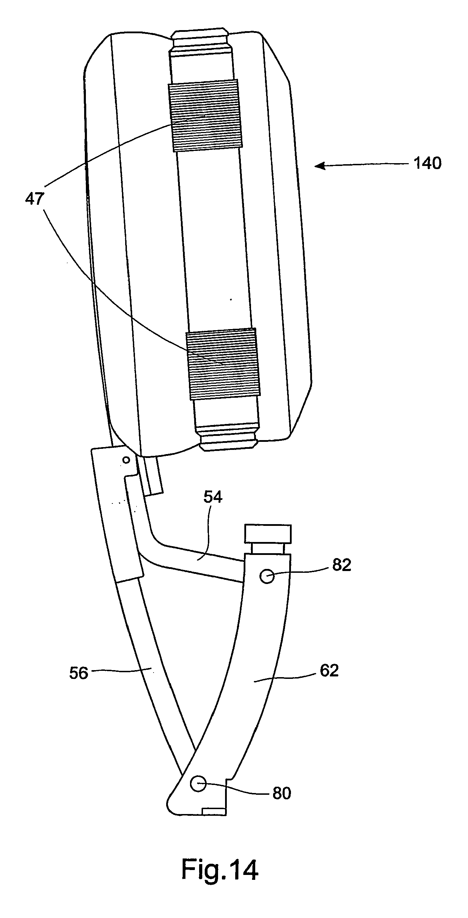

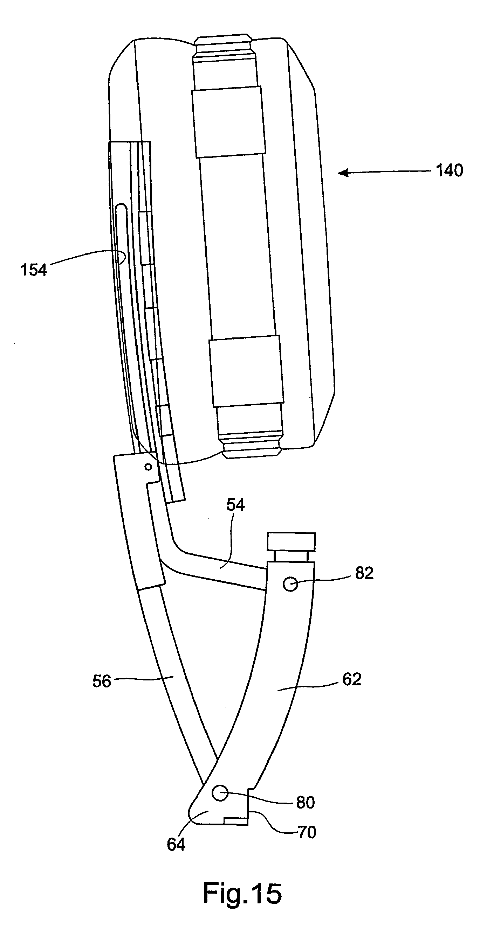

A more detailed description of pivotal (hinged) movement of the cantilever means 50, relative to the I-beam carriage member 52, will now be described with reference to Figures 11 to 15. Pivotal movement of the cantilever means 50 allows the folded seat module 140, to be moved between a lowered position and an elevated position. Starting from the lowered position, if the seat 40 is unfolded (as shown in Figures 6 and 7 for example) a seat position is provided for a vehicle passenger. If the seat is folded to form the module 140, as shown in Figure 11, the seat module 140 can then be raised or elevated, relative to the vehicle floor pan, into the position shown in Figures 14 and 15. As the module 140 is raised, the lower cantilever arm 56 is caused to ride within the channel 154 defined in the upper cantilever arm 54, in the direction of arrow X, as the upper and lower arms 54, 56 are caused to pivot about their laterally offset pivot axes. As the seat module 140 is elevated further, the lower cantilever arm 56 rides further through the channel 154 until the seat module 140 is brought to rest in a fully elevated position (as shown in Figures 14 and 15).

It will be appreciated that when the folded seat module 140 is in the elevated position, a large volume of space is cleared within the vehicle interior 16 where the seats are located when seating passengers. This is best illustrated by reference to Figures 1 and 2, where the volume of the vehicle interior 16 above the floorpan 10 is indicated. By elevating the folded seat module 140 above the vehicle floorpan 10, this relatively large volume of the vehicle interior 16 may then be used for carrying luggage. Furthermore, due to the central I-beam support 18 providing the sole means of support for the seat 40 through the cantilever mounting means 50, no runners, guide tracks or other supports are required on the floorpan 10 for manoeuvring the seat 40 back and forth, and a relatively flat and obstacle-free surface is provided for loading, unloading and storing luggage.

When the seats 40 are unfolded to define seat positions for vehicle passengers, their positions along the I-beam 18 may be adjusted by moving the seats back and forth through relatively small distances. When the seats are folded, they may be slid further along the I-beam support 18 (i.e. towards the rear end 10b of the floorpan 10) to clear a larger space for carrying luggage. Conveniently, the head rest 46 of the seat may be used as a handle means to effect said sliding movement of the seat module 140.

Suitable lock means (not shown) are provided for locating the carnage member 52 in a fixed position once the desired position of the seat 40 or module 140 has been set along the axis of the I-beam support 18.

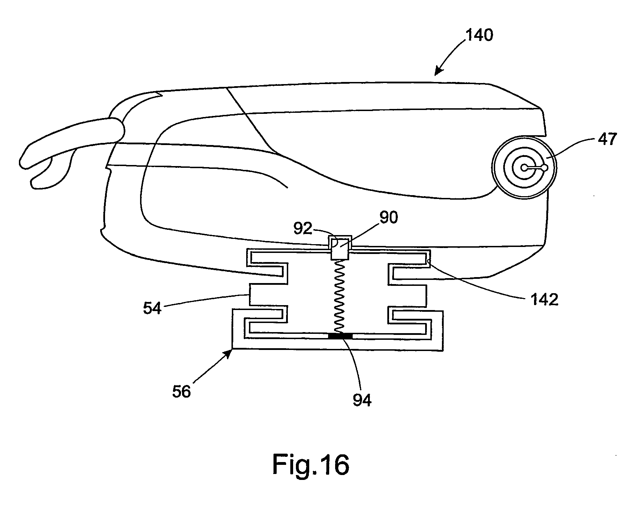

It is preferable for the seat module 140 to be mounted upon the cantilever mounting means 50 in such a manner as to allow the module to be removed from the vehicle altogether. This embodiment of the invention is shown in Figure 16, in which the cantilever mounting means is provided with a detachable mounting arrangement for detachably connecting the upper and lower cantilever arms 54, 56 with the seat module 140. The detachable mounting arrangement for the seat includes a catch means in the form of a movable catch 90, which is received in catched engagement within a recess 92 provided in the underside of the seating portion 42 of the seat 40. The catch 90 is spring biased into the recess 92 by means of a locking spring, and is disengageable from the recess 92 upon activation of a handle 94 which acts against the spring force. If the handle 94 is pulled, the catch 90 disengages from the recess 92 and allows the upper cantilever arm 154 to be removed from the retaining channel 142 on the underside of the seat 40, thereby allowing the seat module to be dismounted from the cantilever mounting means 50 and, hence, removed from the seat support 18 altogether. Once removed from the vehicle, the seat head rest 46 provides a convenient handle with which to carry the folded seat module 140.

Other detachable mounting arrangements are also envisaged to permit the seat modules 140 to be removed from the cantilever mounting means 50, and hence from the vehicle altogether, so as to clear a further enlarged volume within the vehicle interior 16 for carrying luggage.

In an alternative arrangement to that illustrated in the accompanying figures, the I-beam seat support 18 may be replaced by a centrally extending support in the form of a reinforced 'transmission tunnel'. The transmission tunnel in a vehicle is usually defined by a raised section of the vehicle floorpan 10, extending centrally along the main vehicle axis (i.e. between front and rear ends of the vehicle) to accommodate the vehicle transmission system. A transmission tunnel is usually relatively thin-walled, and thus of limited strength and rigidity. However, in the present invention the transmission tunnel may be provided with reinforced tunnel walls (e.g. relatively thick walls or walls having reinforcement cross bars). The cantilever mounting means 50 may then be mounted upon the transmission tunnel, with the vehicle seats mounted upon the cantilever mounting means 50 in the aforedescribed manner. In this arrangement, the transmission tunnel seat support may also form an integral part of the vehicle floorpan 10.

## Claims

1. A cantilever mounting arrangement (50) suitable for use in mounting a seat (40, 140) upon a vehicle seat support (18), the vehicle seat support being mounted on or integrally formed with a vehicle floorpan and the cantilever mounting arrangement (50) comprising:
a lower cantilever member (56) which is pivotally mounted to a support member (52) and an upper cantilever member (54) which is pivotally mounted to the support member (52) so as to enable the seat assembly (40) to be elevated out of a seating position into an elevated position through pivotal movement of said cantilever members (54, 56),
wherein the upper and lower cantilever members (54, 56) project under a side of a base (42) of the vehicle seat (40, 140), in use, so as to provide a sole means for supporting for the vehicle seat base (42) above the vehicle floorpan (10);
and wherein the support member (52) is movable relative to the vehicle seat support (18)
**characterised in that** a first end of the lower cantilever arm (56) is pivotally mounted to the support member (52) about a lower pivot axis (80) and a first end of the upper cantilever arm (54) is pivotally mounted to the support member (52) about an upper pivot axis (82), and wherein a second end of the lower cantilever arm (56) is slidingly coupled to the upper cantilever arm (54).

2. The cantilever mounting arrangement (50) as claimed in claim 1, wherein the support member is a movable carriage member (52) which is slidably mountable upon the vehicle seat support (18), in use.

3. The cantilever mounting arrangement (50) as claimed in claim 1, wherein the upper cantilever arm (54) is provided with a channel (154) along an outer edge thereof, and wherein the lower cantilever arm (56) is provided with a member (156) for sliding engagement within the channel (154).

4. The cantilever mounting arrangement (50) as claimed in claim 3, wherein the support member (52) is bowed between a relatively inner upper end relative to the seat support (18) and a relatively outer lower end (64), the support member being of U-shaped cross-section so as to define a U-shaped channel (65), the lower pivot axis (80) spanning the U-shaped channel (65) at a lower end thereof and the upper pivot axis (82) spanning the U-shaped channel (65) at an upper end thereof.

5. The cantilever mounting arrangement (50) as claimed in any one of claims 1 to 4, wherein the upper cantilever arm (54) is arranged to be received within a retaining channel (42) provided in the seat base (42), in use.

6. The cantilever mounting arrangement (50) as claimed in claim 5, further comprising means for detachably mounting the vehicle seat base (42) to the upper cantilever arm (54).

7. The cantilever mounting arrangement (50) as claimed in claim 6, wherein the detachable mounting means includes a spring-biased catch member (92) which catches in the seat base (42) when the seat (40, 140) is mounted upon the cantilever mounting arrangement, said detachable mounting means further comprising means (94) for disengaging the catch (92) from the seat base (42) when the seat (40, 140) is to be dismounted.

## Patentansprüche

1. Auslegerbefestigungsanordnung (50), die sich eignet zum Befestigen eines Sitzes (40, 140) auf einem Fahrzeugsitzhalter (18), wobei der Fahrzeugsitzhalter auf einer Fahrzeugbodenwanne befestigt oder integral damit ausgebildet ist und die Auslegerbefestigungsanordnung (50) Folgendes umfasst:
ein unteres Auslegerglied (56), das schwenkbar an einem Halterglied (52) befestigt ist, und
ein oberes Auslegerglied (54), das schwenkbar an dem Halterglied (52) befestigt ist, damit die Sitzbaugruppe (40) durch eine Schwenkbewegung der Auslegerglieder (54, 56) aus einer Sitzposition in eine angehobene Position angehoben werden kann,
wobei das obere und untere Auslegerglied (54, 56) unter einer Seite einer Basis (42) des Fahrzeugsitzes (40, 140) vorstehen, um bei Gebrauch ein einzelnes Mittel zum Halten der Fahrzeugsitzbasis (42) über der Fahrzeugbodenwanne (10) bereitzustellen;
und wobei das Halterglied (52) relativ zu dem Fahrzeugsitzträger (18) bewegt werden kann,
**dadurch gekennzeichnet, dass** ein erstes Ende des unteren Auslegerarms (56) um eine untere Schwenkachse (80) schwenkbar an dem Halterglied (52) befestigt ist und ein erstes Ende des oberen Auslegerarms (54) um eine obere Schwenkachse (82) schwenkbar an dem Halterglied (52) befestigt ist und wobei ein zweites Ende des unteren Auslegerarms (56) gleitend an den oberen Auslegerarm (54) gekoppelt ist.

2. Auslegerbefestigungsanordnung (50) nach Anspruch 1, wobei das Halterglied ein bewegliches Schlittenglied (52) ist, das bei Verwendung gleitend an dem Fahrzeugsitzhalter (18) befestigt werden kann.

3. Auslegerbefestigungsanordnung (50) nach Anspruch 1, wobei der obere Auslegerarm (54) mit einem Kanal (154) entlang einem Außenrand davon versehen ist und wobei der untere Auslegerarm (56) mit einem Glied (156) für die gleitende Ineingriffnahme innerhalb des Kanals (154) versehen ist.

4. Auslegerbefestigungsanordnung (50) nach Anspruch 3, wobei das Halterglied (52) zwischen einem relativ inneren oberen Ende relativ zum Sitzhalter (18) und einem relativ äußeren unteren Ende (64) gebogen ist, wobei das Halterglied von U-förmigem Querschnitt ist, um einen U-förmigen Kanal (65) zu definieren, wobei die untere Schwenkachse (80) den U-förmigen Kanal (65) an einem unteren Ende davon überspannt und die obere Schwenkachse (82) den U-förmigen Kanal (65) an einem oberen Ende davon überspannt.

5. Auslegerbefestigungsanordnung (50) nach einem der Ansprüche 1 bis 4, wobei der obere Auslegerarm (54) ausgelegt ist, bei Verwendung innerhalb eines in der Sitzbasis (42) vorgesehenen Haltekanals (42) aufgenommen zu werden.

6. Auslegerbefestigungsanordnung (50) nach Anspruch 5, weiterhin umfassend Mittel zum abnehmbaren Befestigen der Fahrzeugsitzbasis (42) an dem oberen Auslegerarm (54).

7. Auslegerbefestigungsanordnung (50) nach Anspruch 6, wobei das abnehmbare Befestigungsmittel ein federbelastetes Rastglied (92) enthält, das in die Sitzbasis (42) einrastet, wenn der Sitz (40, 140) an der Auslegerbefestigungsanordnung montiert ist, wobei das abnehmbare Befestigungsmittel weiterhin Mittel (94) zum Freigeben der Raste (92) von der Sitzbasis (42) umfasst, wenn der Sitz (40, 140) abgenommen werden soll.

## Revendications

1. Agencement de montage en porte-à-faux (50) adapté pour être utilisé dans le montage d'un siège (40, 140) sur un support de siège de véhicule (18), le support de siège de véhicule étant monté sur un bac de plancher de véhicule, ou faisant partie intégrante de celui-ci, et l'agencement de montage en porte-à-faux (50) comprenant :
un élément en porte-à-faux inférieur (56) qui est monté de façon pivotante sur un élément de support (52) et un élément en porte-à-faux supérieur (54) qui est monté de façon pivotante sur l'élément de support (52) de façon à permettre d'élever l'ensemble de siège (40) d'une position d'assise à une position élevée par le mouvement pivotant desdits éléments en porte-à-faux (54, 56),
dans lequel les éléments en porte-à-faux supérieur et inférieur (54, 56) font saillie sous un côté d'une base (42) du siège de véhicule (40, 140), durant l'utilisation, de façon à constituer un moyen unique de support de la base de siège du véhicule (42) au-dessus du bac de plancher du véhicule (10);
et dans lequel l'élément de support (52) est mobile par rapport au support de siège du véhicule (18)
**caractérisé en ce qu'**une première extrémité du bras en porte-à-faux inférieur (56) est montée de façon pivotante sur l'élément de support (52) autour d'un axe pivot inférieur (80) et une première extrémité du bras en porte-à-faux supérieur (54) est montée de façon pivotante sur l'élément de support (52) autour d'un axe pivot supérieur (82), et dans lequel une seconde extrémité du bras en porte-à-faux inférieur (56) est accouplée de façon coulissante au bras en porte-à-faux supérieur (54).

2. Agencement de montage en porte-à-faux (50) selon la revendication 1, dans lequel l'élément de support est un élément de chariot mobile (52) qui est monté de façon coulissante sur le support de siège du véhicule (18), durant l'utilisation.

3. Agencement de montage en porte-à-faux (50) selon la revendication 1, dans lequel le bras en porte-à-faux supérieur (54) est muni d'une coulisse (154) le long d'un bord externe de celui-ci, et dans lequel le bras en porte-à-faux inférieur (56) est muni d'un élément (156) pour l'engagement coulissant à l'intérieur de la coulisse (154).

4. Agencement de montage en porte-à-faux (50) selon la revendication 3, dans lequel l'élément de support (52) est arqué entre une extrémité supérieure relativement interne par rapport au support de siège (18) et une extrémité inférieure relativement externe (64), l'élément de support étant d'une coupe transversale en forme de U de façon à définir une glissière en forme de U (65), l'axe pivot inférieur couvrant la glissière en forme de U (65) au niveau d'une extrémité inférieure de celle-ci, et l'axe pivot supérieur (82) couvrant la glissière en forme de U (65) au niveau d'une extrémité supérieure de celle-ci.

5. Agencement de montage en porte-à-faux (50) selon l'une quelconque des revendications 1 à 4, dans lequel le bras en porte-à-faux supérieur (54) est agencé pour être reçu à l'intérieur d'une coulisse de retenue (42) fournie dans la base de siège (42), durant l'utilisation.

6. Agencement de montage en porte-à-faux (50) selon la revendication 5, comprenant en outre un moyen pour monter de façon amovible la base de siège du véhicule (42) sur le bras en porte-à-faux supérieur (54).

7. Agencement de montage en porte-à-faux (50) selon la revendication 6, dans lequel le moyen de montage amovible comporte un élément de blocage sollicité par ressort (92) qui se bloque dans la base de siège (42) quand le siège (40, 140) est monté sur l'agencement de montage en porte-à-faux, ledit moyen de montage amovible comprenant en outre un moyen (94) pour désengager l'élément de blocage (92) de la base de siège (42) quand le siège (40, 140) doit être démonté.
